# EUROPEAN PATENT SPECIFICATION

(11) **EP 2 302 901 B1**
(45) Date of publication and mention of the grant of the patent: **06.03.2019**
(21) Application number: 10180166.0
(22) Date of filing: 27.09.2010
(51) Int. Cl.: H04N 5/225, H04N 5/235

(54) **Camera unit with shutter detector**
Kameraeinheit mit Blendendetektor
Unité de caméra avec détecteur d'obturateur

(30) Priority: 25.09.2009 EP 09171357
(43) Date of publication of application: 30.03.2011
(73) Proprietor: Phase One A/S, 2000 Frederiksberg (DK)
(72) Inventor: Mølgaard, Claus, 2850, Nærum (DK)
(74) Representative: Plougmann Vingtoft a/s

(56) References cited:
- US-A1- 2006 098 115
- US-A1- 2007 116 453
- US-A1- 2008 252 768

## Description

### FIELD OF THE INVENTION

The invention relates to camera units and in particular to synchronizing camera functions with a mechanical shutter.

### BACKGROUND OF THE INVENTION

In order to obtain high quality images of advanced digital cameras it is important that the exposure time is correct. The exposure time may be determined by the opening and closing times of a mechanical shutter. An electronic shutter may be synchronized with the mechanical shutter in order to obtain very short exposure times. Further, a flash may be synchronized with the mechanical shutter. Due to tolerances of the opening and closing times of the mechanical shutter it is difficult to accurately time camera functions such as the electronics shutter with the mechanical shutter. Accordingly, it is an object to improve synchronization between camera functions and the mechanical shutter.

In modular camera systems the mechanical shutter is typically located in one camera unit whereas the digital image sensor and the data processing electronics may be located in other units. Accordingly, it may be a problem to obtain synchronization between a mechanical shutter located in one camera unit and other camera functions located in other camera units.

US 2006098115 discloses an image pickup apparatus that enables reduction of shutter release time lag and shutter control with highly accurate shutter time. The apparatus comprises an image pickup element that converts an optical object image incident thereon into an electric image signal to output it, a shutter apparatus having a screen for shielding an exposure aperture for the image pickup element, a reset circuit for reset scanning the image pickup element on a predetermined unit-batch-by-unit-batch basis sequentially in a running direction of the screen, a plurality of detection circuits disposed at different positions along the running direction of the screen for detecting passing of the screen after start of running of the screen for shielding the exposure aperture and before it runs over the exposure aperture, and a control circuit that estimates a running characteristic of the screen during running based on a detection result by the plurality of detection circuit and controls reset scanning by the reset circuit in conformity with the estimated running characteristic.

US 2007/0116453 discloses an optical apparatus including a mechanical shutter in addition to a mechanical diaphragm. The optical apparatus obtains a shutter shifting amount based on acceleration data of the shutter, obtains a total light exposure in a period of time required for the shutter to completely close an aperture of the diaphragm having a predetermined F-number, and calculates an actual exposure time by dividing the total light exposure by a light exposure per unit time calculated from an aperture area of the diaphragm having the predetermined F-number in an opened state.

Whereas US 2007/0116453 discloses a solution for cameras provided with mechanical shutters based on a shutter acceleration, US 2007/0116453 does not satisfactorily solve one or more of the above mentioned problems.

### SUMMARY OF THE INVENTION

The invention seeks to mitigate, alleviate or eliminate one or more of the above mentioned problems singly or in any combination, for example problems relating to shutter synchronization and communication of data for enabling synchronization. In particular, it may be seen as an object of the present invention to provide a camera unit that improves synchronization between a mechanical shutter located in one camera unit and other camera functions located in other camera units, or solves other problems of the prior art.

To better address one or more of these concerns, in a first aspect of the invention a lens unit is defined by claim 1. Advantageous aspects of a lens unit are defined by claims 2-11.

In a second aspect a secondary camera unit is defined by claim 12. An advantageous aspect of a secondary camera unit is defined by claim 13.

In a third aspect a camera body is defined by claim 14. An advantageous aspect of a camera body is defined by claim 15.

In a fourth aspect a camera system is defined by claim 16.

In a fifth aspect a method is defined by claim 17.

In summary, the invention relates to a method for improving synchronization between a mechanical shutter and other camera functions such as the timing of an electronic shutter in a way so that timing compensates for variations of the closing speed of the shutter. In that way predictable and accurate exposure times can be generated. The invention further relates to obtaining such improved synchronization between connectable camera units in a modular camera system by enabling communication of a data signal which contains information about the shutter speed.

In general the various aspects of the invention may be combined and coupled in any way possible within the scope of the invention as defined by the claims. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a camera system comprising a lens unit 100 and a connectable secondary camera unit 120,
Fig. 2 shows camera signals showing the open and closed states of a mechanical shutter and open and closed states of en electrical shutter,
Fig. 3 shows shutter data signals representing opening and closing speed of a mechanical shutter,
Fig. 4 shows a mechanical shutter signal for controlling opening and closing of the mechanical shutter,
Fig. 5 shows a system for controlling the communication means for selecting which of shutter data signal or an auxiliary signal should communicated,
Fig. 6 illustrates a mechanical shutter and a shutter detector for detecting open and closed states of the shutter,
Fig. 7 shows a timing diagram for timing the discharge of a flash.

### DESCRIPTION OF AN EMBODIMENT

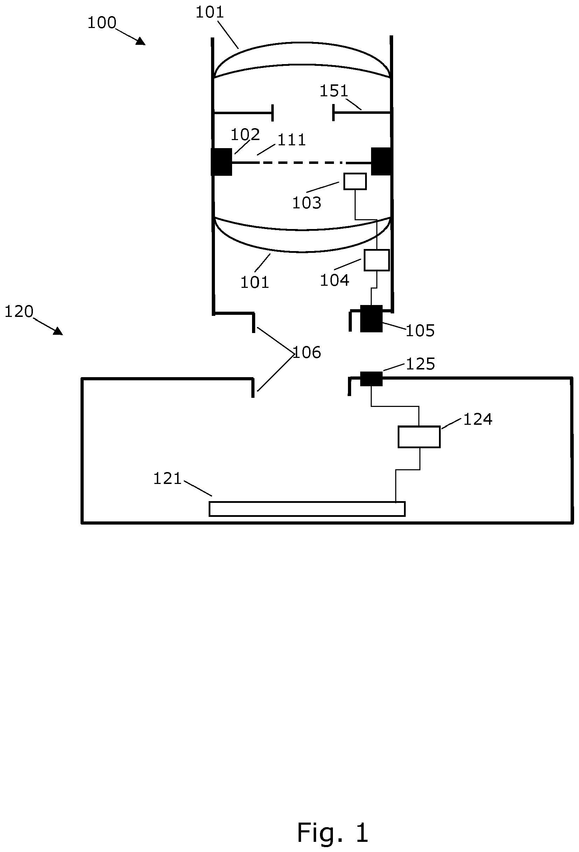

Fig. 1 shows a camera system comprising a lens unit 100 and camera unit 120 which may be connectable to each other via mechanical connection means 106.

The lens unit 100 comprises lenses 101 for projecting images onto a light sensitive image plane, such as a digital image sensor 121, for example a CCD or CMOS image sensor.

The camera unit 120 may be a complete camera body comprising the image sensor 121, control electronics as well as user-operable knobs and bottoms enabling the user to set for example image sensor exposure times. Alternatively, the camera unit 120 may be configured only with the image sensor 121, whereas user-operable bottoms and some control electronics may be located in a camera body (not shown). In this case the camera unit 120 is referred to as a camera back.

The lens unit 100 further comprises a mechanical shutter 102 provided with displaceable light blocking means 111. The light blocking means 111 is displaceable into an open position where light beams are enabled to be transmitted unobstructed through the lens unit and onto the image sensor 121 when the lens unit 100 and the camera unit 120 are assembled. The light blocking means 111 is also displaceable into a closed position where light beams are disabled from being transmitted through the lens unit 100 and to the image sensor 121 since the light blocking means obstructs the light transmission. The solid line of the light blocking means 111 illustrates the open state of the mechanical shutter and the dashed line of the light blocking means 111 illustrates the closed state of the shutter 102.

Some embodiments of the lens unit 100 may further be provided with an iris 151 having an adjustable area of the open aperture through which ray are transmitted unobstructed.

The lens unit 100 is further provided with a detector 103 arranged with the mechanical shutter for detecting motion of the light blocking means 111. Thus, the lens unit 100 may be configured to detect two different positions of the light blocking means 111, where a first position may correspond to a fully or almost open position of the light block means 111, and a second position may correspond to a fully closed or almost closed position of the light blocking means 111.

The detector 103 is connected to a communication means 105, either via a direct wired connection or via a processor 104 for further processing of the detector output. The detector 103 alone or in combination with a data processing means 104 is configured to send a data signal which represents the time difference between the detected first and second positions of the light blocking means 111 as will be described in more details below.

The communication means 105 is capable of communicating with a corresponding communication means 125 of the camera unit 120, either directly when the camera unit 120 is directly connected with the lens unit 100 via the connection means 106, or indirectly when a camera body is inserted between the lens unit 100 and the camera unit 120. In the last case the camera body may simply transmit the shutter data signal received from the communication means 105 directly to a communication means which is connectable with the communication means 125 of the camera unit 120, or the a processor comprised by the camera body may process the shutter data signal, e.g. adapt voltage formats, before the signal is transmitted to the camera unit 120.

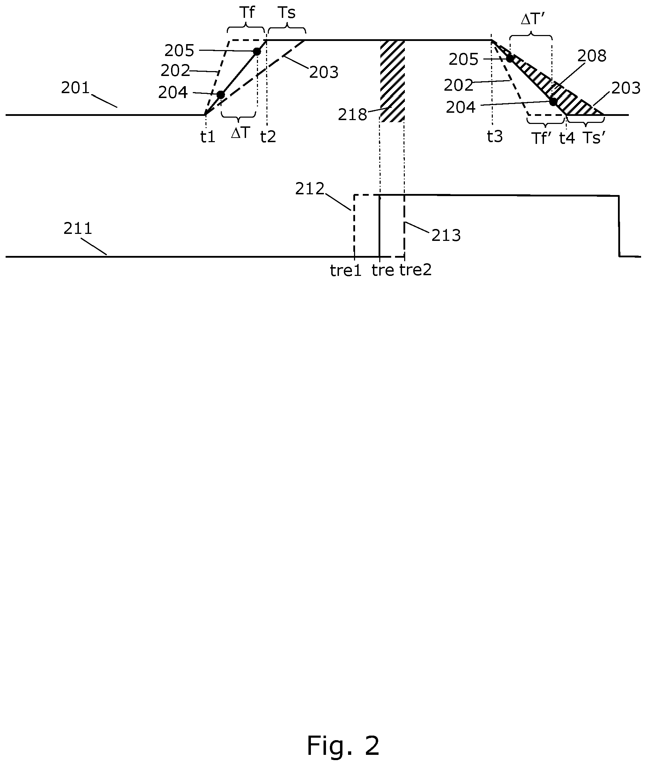

To address issues relating to the shortcomings of the mechanical shutter 102 which the inventor has investigated in his attempt to alleviate these shortcomings, reference is made to Fig. 2.

Shutter signal 201 (solid line) in Fig. 2 shows the position (in the vertical or ordinate direction) of the light blocking means 111 as a function of time (in the horizontal or abscissa direction). At time t1 the position of the light blocking corresponds to a fully closed position and at time t2 the light blocking means has a fully open position. Between times t1 and t2 the light blocking means shifts from the fully closed position to the fully open position and the position of the light blocking means changes gradually. During the shift of the light blocking means 111, the amount of light transmission (i.e. light power) through the lens unit 100 also changes gradually in dependence of the position of the light blocking means 111.

During the time from t2 to t3 the mechanical shutter 102 is fully open, and from t3 to t4 the state of the mechanical shutter 102 changes from open to closed, where during the final transition the light transmission through the lens unit gradually decreases.

The speed by which the light blocking means 111 of the mechanical shutter 102 changes position during a change from an open state to a closed state may change during the lifetime of the mechanical shutter. Generally, the mechanical shutter becomes slower during use; however, changes to faster operation may also occur. Position curves 202 and 203 of the light blocking means 111 illustrate this problematic.

Thus, curve 202 (short dashes) illustrates a mechanical shutter 102 which operates faster than intended according to the nominal position curve 201. The mechanical shutter 102 operating fast according to position curve 202 reaches the open state from a closed state a time Tf faster than intended and reaches a closed state Tf' faster than intended. The transition times Tf and Tf' are generally different; however, for practical applications of the camera the transition times may be considered equal or substantially equal.

Similarly, the mechanical shutter 102 operating slowly according to position curve 203 reaches the open state from a closed state a time Ts slower than intended and reaches a closed state Ts' slower than intended. Again, he transition times Ts and Ts' are generally different; however, for practical applications the transition times may be considered equal.

The detector 103 is configured to detect when the light blocking means 111 reaches the first position 204 immediately after the light blocking means 111 has started moving from the closed position towards the open position, i.e. immediately after t1 and, consequently, also to detect when the light blocking means 111 reaches the first position 204 immediately before the light blocking means reaches the closed position from the open position, i.e. immediately before time t4.

Similarly, the detector 103 is configured to detect when the light blocking means 111 reaches the second position 205 immediately before the light blocking means reaches the open position from the closed position, i.e. immediately before time t2 and, consequently also to detect when the light blocking means reaches the second position 205 immediately after the light blocking means has started moving from the open position towards the closed position, i.e. immediately after time t3.

The time difference ΔT between the detected first 204 and second positions 205 provides information about the speed of the shutter during the transition from the closed to the open state of the shutter 102. Similarly the time difference ΔT' between the detected second 205 and first positions 204 provides information about the speed of the shutter during the transition from the open to the closed state of the shutter 102. That is, the delay ΔT and ΔT' can be used to determine the deviation of the shutter speed from the intended shutter speed by comparing measured delay values ΔT and ΔT', by nominal delay values ΔT and ΔT' given by the nominal position curve 201. For practical purposes of the camera ΔT and ΔT' can be considered approximately equal.

Since the displacement curve 201 during opening and closing transitions may not show a linear displacement, but exponential increasing or decreasing displacements, then in order to correctly determine the increases or decreases Tf, Ts, Tf', Ts' of the opening and closing times from the measured delay times ΔT or ΔT' it may be useful that the measured difference ΔT or ΔT' corresponds to the actual opening and closing times t2-t1, t3-t4.

The detector 103 may advantageously be arranged so that the time difference ΔT or ΔT' between the first position 204 and the second position 205 constitutes the greatest possible fraction of the opening time t2-t1 or the closing time t3-t4. For example, the time difference ΔT or ΔT' may be greater than a fraction of 0.3, preferably greater than 0.5, or more preferred greater than 0.8, such as 0.9, of the opening time t2-t1 or the closing time t3-t4. Indeed by locating the sensing elements of the detector 103 so that the first position 204 is detected before t1 and after t4 and the second position 205 is detected after t2 and before t3, the time difference ΔT or ΔT' may be greater than the opening time t2-t1 or the closing time t3-t4, e.g. greater by 1.1 times the opening time.

Thus, if it is know that ΔT' represents a fraction of 0.9 of the actual closing time t3-t4, then the actual closing time including any shutter-time-variations Tf' or Ts' may be determined as ΔT' divided by 0.9.

If no other light obstructions were present between the image sensor 121 and the mechanical shutter 102, the image pixels of the image sensor would integrate light induced charges as long as the mechanical shutter is open or partially open, i.e. during an exposure time given by the time difference t4-t1.

However, in order to obtain shorter time differences than a minimum time difference t4-t1 obtainable by the mechanical shutter, the mechanical shutter may be combined with an electrical shutter.

The electrical shutter function may provided by the capability of the image sensor to reset pixel charges of each image pixel by setting a reset signal supplied to the image sensor. The reset signal causes the accumulated light induced charges of each pixel to the drained - this is equivalent to setting all pixel values to zero. Thus, immediately after setting the reset signal, i.e. changing the value of the reset signal, the image sensor starts to integrate light induced pixel charges corresponding to the received light so as to form pixel values corresponding to the received light.

Fig. 2 shows a reset signal 211 as a function of time (in the abscissa direction) where a set value corresponds to a high value (in ordinate direction). The reset signal 211 is set - i.e. the value of the reset signal is changed into a value causing a resetting of the image sensor 121 - at time tre. The resetting of the image sensor causes a resetting of the pixel values of the image sensor by draining the integrated pixel charges. Accordingly, the exposure time of the image sensor corresponds to the duration from the resetting time tre to the time when the mechanical shutter closes at time t4.

Instead of a reset signal 211 an equivalent electronic shutter functionality may be used which is capable of enabling and disabling the capability of the pixels of the image sensor to convert photons, i.e. light received by the pixels, into electron charges which builds up the pixel values, e.g. voltage values, of the pixels. Thus, the electronic shutter enables setting the photoactive image sensor region, i.e. the pixels, in a non-electron receiving state, for example by applying a higher potential then normal on the photoactive region to prevent electron charges from being integrated during the image exposure period.

Thus, instead of applying a reset signal 211 to initiate the exposure period, an enabling electronic shutter signal may be set to enable the pixels to generate or integrate light induced electron charges. Since the effect of the electronic shutter signal for enabling the electron receiving capability of pixels is equivalent to the functionality of the reset signal 211 with respect to generation of pixel values during the time tre to t4, an illustration of the electronic shutter signal is omitted.

Since, the enabling electronic shutter signal and the charge reset signal 211 are functionally different, but have the same effect of initiating integration of light induced charges corresponding to the received light received subsequent to setting the reset signal or the enabling electronic shutter signal, both signals are commonly referred to as an integration start signal 211. Similarly, the reset time tre and the time for enabling the electronic shutter to generate or integrate light induced charges may commonly be referred to the imaging start time tre.

The actual amount of exposure of the image sensor 121 is not exactly linearly dependent on the exposure time, e.g. t4-tre, since the amount of light transmitted through the mechanical shutter 102 changes gradually during the transition from the open state to the closed state, i.e. from time t3 to time t4, due to the gradual change of the area of the shutter through which light is transmitted. Accordingly, if the mechanical shutter operates slowly according to the shutter position curve 203, the image sensor will be overexposed by an amount corresponding to the additional amount of light transmitted during the period of time Ts'. Intuitively, this additional amount light can be seen as the hatched area 208.

This overexposure can be compensated by delaying in time the setting of the reset pulse 211 for example to time tre2. Accordingly, by determining the delayed time tre2 for setting the reset signal 213 so that the amount of light which would otherwise have been transmitted during the period of time given by T=tre-tre2 equals or substantially equals the additional amount of light transmitted during the period of time Ts', the variation Ts' in a delay (t4-t3) of a transition from an open state to a closed state of the mechanical shutter 102 can be compensated. Intuitively, the compensation time tre2 is determined so that an area 218 corresponding to an amount of energy of transmitted light (that would otherwise have been transmitted) equals the area 208 corresponding to the additional amount of light.

In the same way an underexposure caused by a fast mechanical shutter 102 resulting in a shortening of exposure time by Tf' can be compensated by determining an advanced time tre1 for setting the reset signal 212 so that the additional amount of light transmitted during the period of time given by T=tre1-tre equals or substantially equals the amount of light which would otherwise have been transmitted during the period of time Tf'.

The reset signal 211, 212, 213 may be generated by a signal generator, for example a processor 124 comprised by the camera unit 120.

The time instant tre, tre1, tre2 for setting the reset signal 211, 212, 213 - in general the time instant tre, tre1, tre2 for causing a reset action of the image sensor - is determined by a processor 124 on basis of the shutter data signal received by communication means 125. Since the shutter data signal contains information about the first and second shutter positions 204, 205 or the transition delay ΔT, ΔT', the image sensor reset time can be determined by delaying or advancing the nominal image sensor reset time tre to modified reset times tre1, tre2 which are determined according to the principles described above.

For example, a transition delay ΔT of 0.00015 s may have been determined from time stamps of the first and second positions 204, 205 whereas the nominal transition delay ΔT is 0.00010 s. The difference may correspond to an increased shutter delay time Ts' of 0.00006 s. In order to compensate for the increased exposure, the nominal reset time tre may be delayed e.g. from tre=0 s to tre2=0.00003 s.

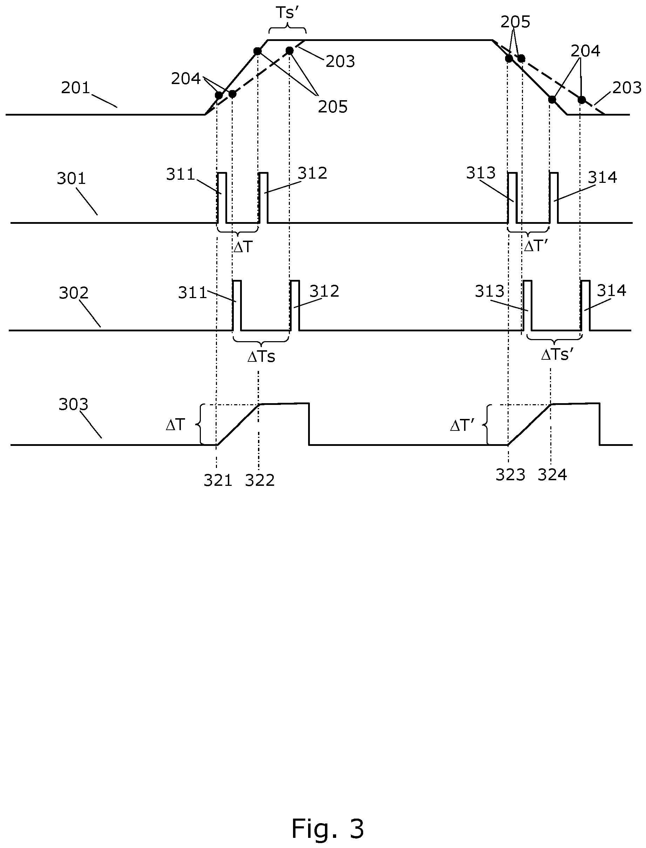

Fig. 3 shows the position curve 201 of the light blocking means 111, the position curve 203 of a corresponding but slower light blocking means 111, and first 204 and second 205 positions of the light blocking means both for the mechanical shutter 102 with normal light blocking means 111 and the shutter 102 with slow light blocking means.

Signals 301-303 show data signals as a function of time and representing a time difference ΔT, ΔT' between the detected first 204 and second 205 positions of the light blocking means 111.

Data signal 301 may be directly generated by the detector 103, where the detector is configured to detect the first 204 and second 205 positions and generate respective first 311 and second 312 position pulses. Accordingly, the time separation between the first 311 and second 312 position pulses, for example between the rising edges of the pulses, is equal to the time separation ΔT between the first 204 and second 205 positions of the light blocking means 111.

Accordingly, during a transition from a closed shutter state to an open shutter state, pulses 311 and 312 are generated and the time separation between the pulses 311,312 is equal or substantially equal to the time separation ΔT between first 204 and second 205 shutter positions. The same detector will generate third 313 and fourth 314 pulses during a transition from the open shutter state to the closed shutter state where the time separation between the pulses 313,314 is equal to the time separation ΔT' between the second 205 and first 204 positions of the light blocking means 111 during the closing operation.

Consequently, for a slow mechanical shutter characterized by the slow shutter position curve 203, the detector 103 will generate first 311 and second 312 pulses representing a time difference ΔTs between the detected first 204 and second 205 positions of the light blocking means 111 during an opening operation; and the detector 103 will generate third 313 and fourth 314 pulses representing a time difference ΔTs' between the detected second 205 and first 204 positions of the light blocking means 111 during a closing operation as shown by shutter data signal 302.

Shutter data signal 303 shows another format of a data signal representing a time difference between the detected first 204 and second positions 205 of the light blocking means. Instead of generating pulses 311-314 corresponding to time instants, an electrical potential value (corresponding to the vertical or ordinate value) is generated where the potential value, e.g. a voltage, is linearly related to the time difference ΔT or ΔT' between first 204 and second positions 205. The detector 103 or a processor 104 may be configured to generate the electrical potential value 303 by initiating integration of a constant current at time 321 triggered by detection of the first position 204 and ending the current integration at time 322 corresponding to the second position 205 so that the potential value ΔT corresponds to the shutter delay during a transition from a closed to an open shutter state. Similarly, by initiating integration of a constant current at time 323 triggered by detection of the second position 205 and ending the current integration at time 324 triggered by the first position 204 so that the potential value ΔT' corresponds to the shutter delay during a transition from an open to a closed shutter state .

As explained previously, by comparing the nominal shutter delay ΔT or ΔT' with the actual shutter delay ΔTs or ΔTs', can be used for determining the time instant tre, tre1, tre2 for setting the reset signal 211, i.e. changing the state of the reset signal to cause resetting of the image sensor 121. That is, the comparison of the nominal shutter delay ΔT or ΔT' with the actual shutter delay ATs or ATs' can be used to determine an additional exposure time Ts' when ΔTs or ATs' is greater than ΔT or ΔT', and a compensating delay of the reset time tre corresponding to a new reset time tre2 can be determined from Ts'. Compensating reset times tre, tre1, tre2 can be determined from additional exposure times Ts' or reduced exposure times Tf', from experimentally determined look-up tables or derived via mathematical relations.

Since the shutter data signal 301-303 is characterized by single value at any given time instant, the data signal can be transmitted by via a single conductor and a communication means with only a single conducting connector. An electrical data signal 301-303 requires an additional reference potential or ground signal, however this additional ground signal may be common ground signal common with other signals. Alternatively, the data-signal 301-303 may be communicated as an optical signal through a single optical conductor, e.g. an optical fibre, and a communication means 105,125 in the form of an optical connector.

In an embodiment a data signal 301-303 representing only a time difference ΔT, ΔTs between the detected first 204 and second 205 positions obtained only during a shift from the closed position to the open position of the light blocking means 111 is communicated via the external communication means 105. Although in principle only shutter delay times ΔT', ΔTs' of a closing operation and the related the additional exposure time Ts' or the reduced exposure time Tf' are determinative for the determination of the reset time tre, the shutter delay times ΔT, ΔTs of a an opening operation may be used instead for determining the additional or reduced exposure times Tf', Ts' and the reset time tre, tre1, tre2, since the opening transition time ΔT can be considered equal to the closing transition time ΔT' for practical purposes of the lens unit 100.

The data signal 301-303 representing only a time difference ΔT, ΔTs of a shutter delay during an opening transition may be communicated before the initiation of a shift to a subsequent closed position of the light blocking means, i.e. after time t2 and before time t3.

The instant for communicating said data signal 301-303 representing only a time difference ΔT, ΔTs obtained during an opening shutter transition may the triggered by setting a mechanical shutter signal high, where the high setting causes the mechanical shutter 102 to initiate changing the position of the light blocking means 111 from a closed position to an open position. Accordingly, said shutter data signal 301-303 may be communicated before the setting the mechanical shutter signal low, where the low setting causes the mechanical shutter 102 to initiate changing the position of the light blocking means from an open position to a closed position.

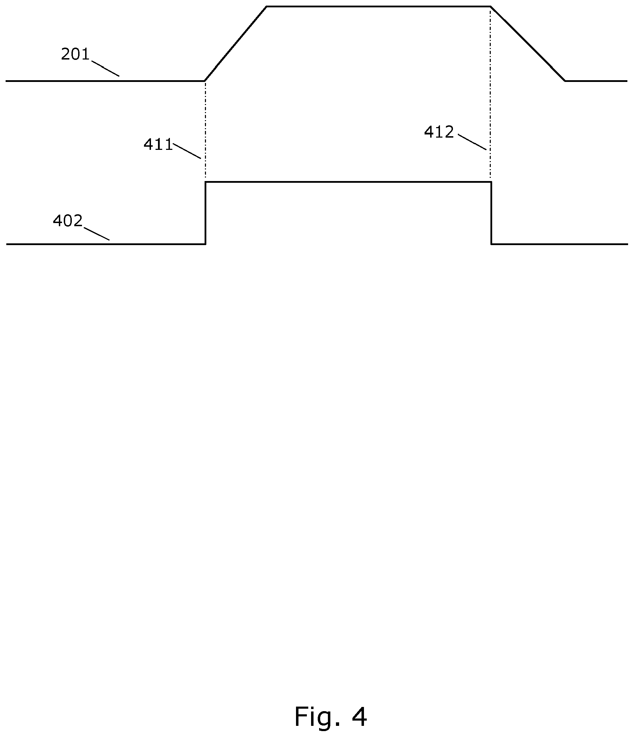

Fig. 4 illustrates a possible mechanical shutter signal 402. At time 411 the mechanical shutter signal 402 is set high which triggers the position 201 of the light blocking means 111 to initiate a change from a closed position to an open position. At time 412 the mechanical shutter signal 402 is set low which triggers the position 201 of the light blocking means 111 to initiate a change from the open position to a closed position. In practice a delay may be present between changing the low or high value of the mechanical shutter signal 402 and a positional change of the mechanical shutter. Clearly, the mechanical shutter signal 402 may be configured in alternative ways.

Communicating the data shutter signal 301-303 before initiating the mechanical shutter 102 to subsequently shift to closed position has the advantage that the reset time tre can be adjusted in real time. Since the shutter delay times ΔT, ΔT' may be dependent on ambient conditions such as temperature and humidity, real time adjustment of the reset time tre may be advantageous compared to determining the reset time based on stored delay times obtained from previous operations of the mechanical shutter 102.

In an embodiment the communication means 105 has first and second operational modes, where the first mode is intended for communication of the data signal representing data other than the detected positions 204,205 of the light blocking means 111, and the second mode is intended for communication of the data signal 301-303 representing a time difference ΔT, ΔT' between the detected first and second positions 204, 205 of the light blocking means 111.

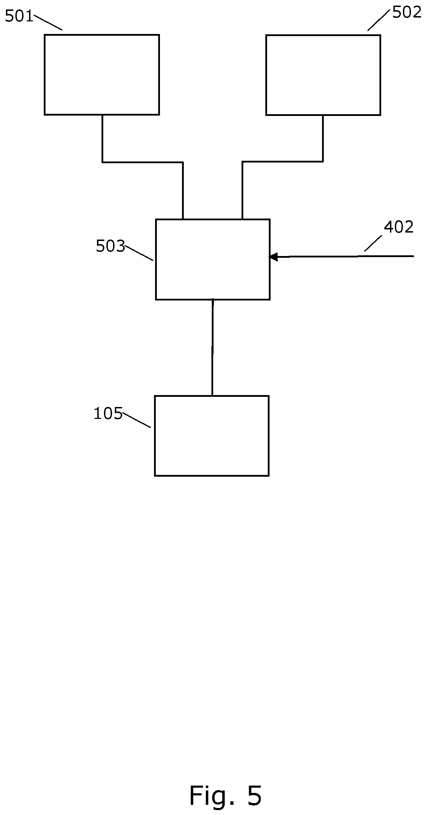

Fig. 5 shows a system for controlling the selection of operational modes, such as first or second operational modes, of the communication means 105 dependent on an externally supplied signal, for example a value of a mechanical shutter signal 402. In Fig. 5 shutter detection means 501 supplies the shutter data signal 301-303 to communication controller 503 during the second operational mode of the communication means 105. The shutter detection means 501 may be equivalent to the shutter detector 103 when the output of the detector 103 is supplied directly to the communication means 105 or the shutter detection means 501 may be equivalent to the shutter signal processor 104 when the output of the processor 104 is supplied directly to the communication means 105. The auxiliary data means 502 supplies an auxiliary data signal representing data other than the shutter data signal 301-303 to the communication controller 503 during the first operational mode of the communication means 105.

The auxiliary signal may be a signal related to a setting of the lens unit 100, for example a value corresponding to the focus distance setting of the lens unit or a setting of the adjustable iris 151. Since the iris setting may have influence on the setting of the reset signal 211, 212, 213, in dependence of the measured shutter delay ΔT, AT', the iris setting may advantageously be transmitted during the first operational mode of the communication means, so that the most recent iris setting is available for computing the reset signal 211, 212, 213 in dependence of the most recent measurements of shutter delay ΔT, ΔT'. Advantageously, the iris setting and the shutter delay time values, e.g. t1, t2, and/or ΔT, may be transmitted though the same connector pin(s) by use of capability of the communication means 105 to transmit different data type during different operation modes.

The communication controller 503 is capable of selecting which of the shutter data signal 301-303 and the auxiliary data signal should be connected and supplied to the communication means 105. As an example the selection may be based on the high or low state of the mechanical shutter signal 402, for example so that when the mechanical shutter signal 402 it set to high (for initiating the mechanical shutter to open the light blocking means) the communication controller 502 selects the shutter data signal 301-303. When the mechanical shutter signal 402 is set to low again, the communication controller 502 selects the auxiliary data signal so that the communication means 105 supplies other signals that shutter signals 301-303 to the camera unit 120.

As another example the selection may be based on the shutter data signal 301-303. For example, the selection may be based on the detection of the second position 205 of the light blocking means, for example so that a rising edge of the second position pulse 312 triggers a switch to the second operational mode of the communication means 105 for communicating the shutter data signal 301-303. The switch to the second operational communication mode based on the second position pulse 312 may be conditioned on that the first positional pulse 311 was detected initially. Accordingly, a switch back to the first operational mode of the communication means 105 may be based on a subsequent detection of the second position 205 or the first position 204.

Thus, in general a selection of the first or second operational mode is dependent on the detecting of first (204) and/or second (205) positions of the light blocking means and possibly dependent on the order in time of the detection of first (204) and/or second (205) positions.

Advantageously, when the communication means 105 is in the second operational mode, e.g. in response to the rising edge of the second position pulse 312 or generally in response to detecting of first 204 and/or second 205 positions of the light blocking means, any data communication via the communication means 105 other than data from the shutter detection means 501 is prohibited so that timing data representing the closing state of the light blocking means is not affected due to presence of other signals on the common data bus comprised by the communication means 105.

In is understood that the communication means 105 may comprise data processors for switching between first and second operational modes, a data protocol controller for ensuring correct coding of incoming or outgoing signals as well as timing of the transmission of data signals. Further, the communication means 105 may, in an embodiment, comprise a multiplexer for transmitting different data values on a single communication channel. It is also understood that the communication means 105 may comprise physical connectors corresponding to the communication channel or channels, such as electrical or optical single pin connectors or electrical multipin connectors.

The camera signal may be a mechanical shutter signal configured for initiating a change of the position of the light blocking means. Alternatively, the camera signal may be the shutter data signal. For example, a switch to the second operational mode of the communication means may be triggered by the detection of the second position of the light blocking means.

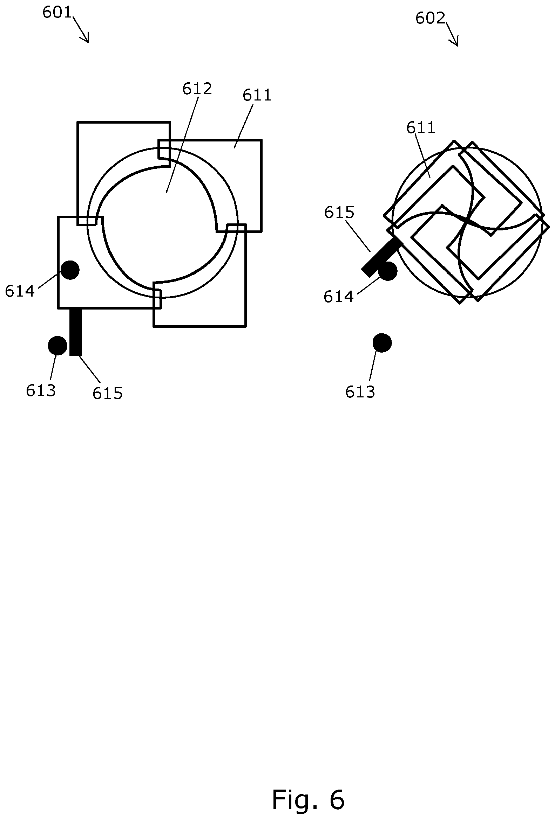

Fig. 6 illustrates a leaf shutter as an example of a mechanical shutter 102 with light blocking means 611 in the form of rotatable leaf blades. In the illustration to the left the leaf blades 611 are in an open position or open state 601, and in the illustration to the right the leaf blades 611 are in a closed position or closed state 602. Thus in the open state 601 light is able to be transmitted through the aperture 612, whereas in the closed state 602 light is disabled from being transmitted.

Fig. 6 schematically shows a detector in the form of first 613 and second 614 light transmission detectors arranged with the mechanical shutter for detecting motion of the light blocking means 611. The detectors 613, 614 are optical detectors comprising a light transmitting means and a light receiving means configured so that when the receiver receives light from the light transmitter then the detector generates a low output signal, and when the receiver does not receive light from the transmitter a high output signal is generated. Fig. 6 illustrates that the detectors 613, 614 are arranged relative to a non-transparent protruding member 615 of the light blocking means 611 so when the light blocking means 611 moves from an open position to a closed position the first detector 613 generates a first output pulse 313 since the protruding member 615 obstructs light transmission. Before the light blocking means 611 reaches the closed position the second light detector 614 generates a second pulse 314. Clearly, during the transition from a closed to an open position, corresponding pulses 311, 312 are generated. Accordingly, the time delay between output pulses generated by the first and second detectors 613, 614 can be used to characterize the transition speed of the mechanical shutter 102.

The first and second light transmission detectors 613, 614 or other position detectors of the light blocking means, such as inductive or magnetic sensors, may be positioned so that the first detector 613 measures the first position 204 when the shutter is in an opening position, i.e. immediately before or after the shutter starts limiting the opening, and so that the second detector 614 measures the second position 205 when the shutter is en a closing position, i.e. immediately before of after the shutter has block the opening. In other words the first and second detectors 613, 614 may be positioned so the measured time difference (ΔT, ΔT') determined from the first 204 and second 205 positions is greater than a fraction of 0.3, preferably greater than 0.5, or more preferred greater than 0.8 of an opening time of the shift from the closed position to the open position or an closing time of the shift from the open position to the closed position.

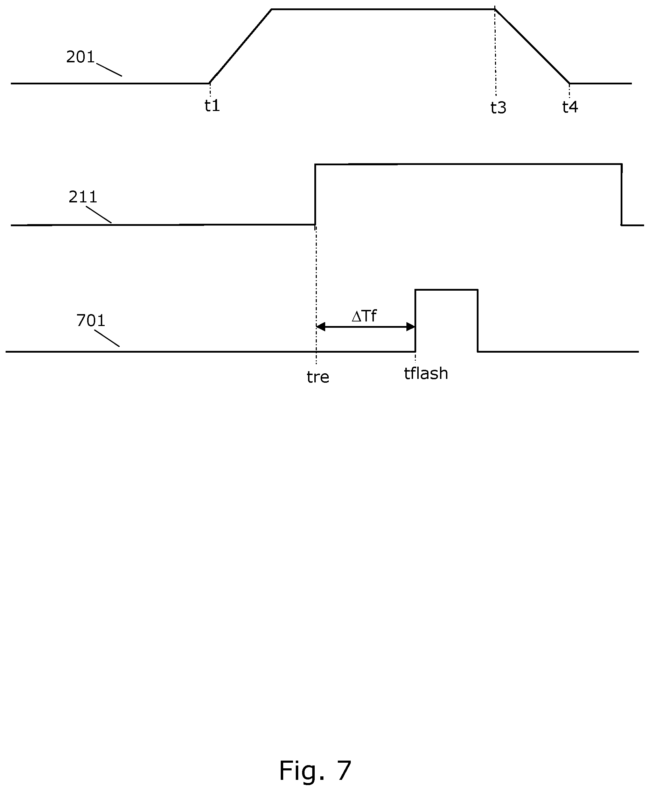

Fig. 7 shows a timing diagram for a flash signal 701. The setting of the flash signal at time tflash triggers a flash to discharge and generate a flash of light. Clearly, the flash should be triggered during the pixel charge integration period between tre and t4. The delay ΔTf between the start of the integration period tre and the triggering of the flash at time tflash may be automatically adjusted depending on duration between the reset time tre or the corrected reset times tre1 or tre2 and the time t3 when the closing of the mechanical shutter is initiated. The user may set a preferred time of the flash discharge time tflash relative to the start or the end of the integration period, i.e. immediately after the reset time tre or immediately before initiation of the closing operation at time t3 or immediately before the completion of the integration time at t4. The possibility of timing the flash, enables the user to freeze motion of an object at a desired time relative the integration period. For example, the user may wish to take a picture of falling rain drops so that the drops are frozen just at the end of the exposure period, i.e. immediately before the shutter closes at t4. This will create the correct illusion of motion where the drops are frozen at a lowest point with motion streaks pointing upwards.

Since the reset time tre,tre1,tre2 for initiating integration of light induced charges corresponding to the received light is determined in response to the time difference between the detected first and second positions 204,205 of the light blocking means 111, the flash trigger time tflash may also be determined in response to the detected first and second positions 204,205 or equivalently in response to the determined reset time tre. Determining the flash trigger time tflash in response to the detected first and second positions 204,205 enables correct timing of the flash discharge relative to the reset time tre or relative to the shutter closing at time t3 or t4. Consequently, if the corrected reset time tre1, tre2 was not taken into consideration for determining timing of the flash, the flash may be discharged too early or too late relative to the reset time tre when an advanced flash is desired to freeze objects in the start of the integration period. Or, the flash may be discharged too early or too late relative to the shutter closing time t3 or t4 when a delayed flash is desired to freeze objects in the end of the integration period.

Thus, the camera unit 120 may be provided with a signal generator for setting a flash signal for instructing a connectable or integrated flash to generate a light flash. The time instant tflash or the delay ΔTf relative to the reset time tre for setting the flash signal 701 may be based upon the received data signal 301-303, i.e. the detected first and second positions 204,205, or the time instant tre for generation of the reset signal.

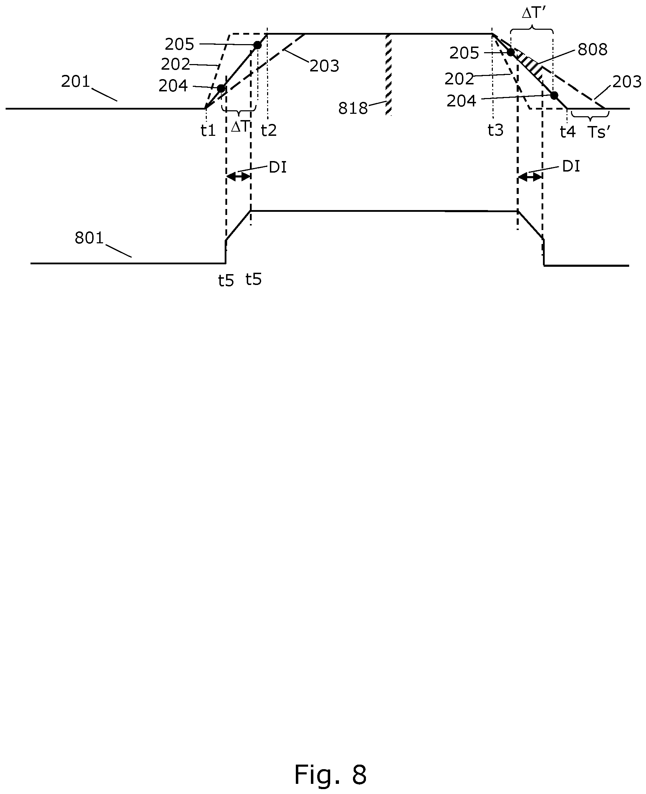

Fig. 8 shows the shutter signal 201 of Fig. 2. However in Fig. 8 the amount of light energy is limited by the iris 151. Thus, even though the shutter starts opening at t1, light is not transmitted until time t5 due to the iris, since the iris effectively generates an aperture with diameter DI at the position of the shutter. The amount of light transmitted through the shutter and the iris is illustrated by curve 801.

When the mechanical shutter operates slowly according to the shutter position curve 203, the image sensor will be overexposed by an amount corresponding to the additional amount of light transmitted during the period of time Ts'. With the presence of the iris this additional amount of light can be seen as the hatched area 808, which is smaller than the corresponding overexposure area 208 in Fig. 2. Accordingly, in order to compensate for the overexposure 808, the compensation time tre2 is determined so that an area 818 corresponding to an amount of energy of transmitted light (that would otherwise have been transmitted) equals the overexposure 808. By comparison with Fig. 2 it is clear that reset compensation time tre2 necessary for compensating the overexposure in Fig. 8, is different from compensation time tre2 of Fig. 2. This shows that the iris setting data must be used together with the shutter delay data for correct determination of the electronic shutter compensation time tre, tre1, tre2. Thus, advantageously the iris setting data and the shutter delay data may be transmitted to the processor 124 via the same connector pin(s) of the communication means 105, but at different times as enabled by the first and second operation modes of communication controller 503.

The actual position of blade leafs of the iris 151, or other aperture limiting means, may be detected by one or more iris detectors. It this way it is possible to detect and determine the actual aperture of the iris, i.e. the opening of the iris, including any deviations of the iris size due to tolerances of the iris. Thus, in addition to the iris setting the actual measured position of the iris may be transmitted as auxiliary data via the communication means 105 to the secondary camera unit 120 and/or the camera body 910. Accordingly, the electronic shutter compensation time tre, tre1, tre2 or reset time, may be determined to compensate for tolerances of the iris.

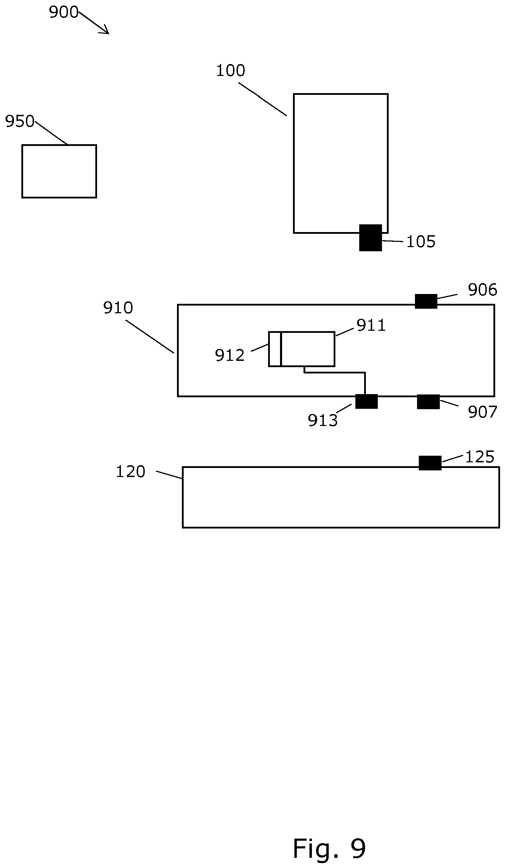

Fig. 9 shows a camera system 900 comprising the lens unit or lens unit 100 and the camera unit or secondary camera unit 120 which as described in connection with Fig. 1. The system 900 further illustrates the camera body 910. It is noted that the camera body 910 and the secondary camera unit 120 may be integrated into a single integrated camera unit which will also be referred to as the secondary camera unit 120 since the integrated camera unit houses the same technical components as the modular secondary camera unit 120. The camera body 910 is connectable to the first and secondary camera units by connection means such as bayonet connectors (not shown).

The shutter delay data, e.g. ΔT, the shutter data signal 301-303 or other shutter delay relates signals and auxiliary signals may be transmitted from the communication means 105 to the communication means 125 via the camera body 910. For the transmission of signals via the camera body 910, the camera body 910 is provided with a first communication means 906 and a second communication means 907. The first and second communication means 906, 907 comprises connectors which matches the connectors of the communication means 105, 125 of the lens unit and secondary camera unit. In an embodiment data received by the first communication means 906 may be directly transmitted to the second communication means 907 or vice versa. For example, this embodiment may be embodied by a wire connection between the first and second communication means. In another embodiment data received by the first communication means 906 is processed by a processor 911 before being transmitted to the second communication means 907 or vice versa. For example, the processor 911 may introduce a delay before transmitting the received signal again.

In an embodiment, the processor 911 may also process the received data. For example, the processor 911 may determine the time instant tre, tre1, tre2 for setting the reset signal 211, 212, 213 - in general the time instant tre, tre1, tre2 for causing a reset action of the image sensor - on basis of the shutter data signal received by communication means 125. Thus, the determining the time instant tre, tre1, tre2 for setting the imaging start signal 211 based upon the received shutter data signal may be performed by the processor 911 of the camera body 910 or the secondary camera unit 120.

The processor 911 may be connected to a wireless transmitter 912 for transmitting data to a wireless unit 950 such as a wireless flash and/or the processor may be wire connected to a flash connector 913 for connecting with a flash.

The transmission of a flash signal 701 to the wired flash or the wirelessly connected flash 950 may by delayed by a time ΔTcomm relative to the transmission of shutter data or reset data (tre) to the secondary unit 120. Since the reset of the image sensor 121 at time tre, tre1, tre2 may be required to be synchronized with the firing of the flash at time tflash, the processor 911 may introduce a delay Δon the data to be transmitted to the secondary unit 120 so that the desired time delay ΔTf between the image reset signal tre and the setting the of flash signal 701 is maintained. The introduced delay ΔTtransmit may be determined from the flash delay ATcomm, e.g. ΔTtransmit may be equal to ΔTcomm. The delay ΔTcomm could also be associated with other units than flash units, e.g. computers.

It is understood that the first communication means 906 and the second communication means 907 may communicate shutter signals as well as auxiliary data signals, such as iris setting signals.

Accordingly, any of the communication means 105, 125, 906, 907 may have first and second operational modes, where the first mode comprises communication of a data signal representing data other than the detected positions of the light blocking means, and the second mode comprising communication of the data signal representing a time difference ΔT between the detected first and second positions of the light blocking means or representing reset timing data tre, tre1, tre2.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A lens unit (100) connectable with a secondary camera unit (120) comprising a camera back or a camera body and a camera back, the lens unit comprising
- a mechanical shutter (102) with displaceable light blocking means (111), where the light blocking means is displaceable into an open position for enabling light transmission through the lens unit and a closed position for disabling light transmission, where the position of the light blocking means changes gradually during a shift from the closed position to the open position or vice versa, **characterized in that** the lens unit comprises,
- a detector (103) for detecting first (204) and second (205) positions of the light blocking means during a shift from the closed position to the open position and/or vice versa and for generating a data signal (301-303) representing a time difference (AT, AT') between the detected first and second positions of the light blocking means,
- a communication means (105) for communicating the data signal (301-303) output from the detector (103) to a corresponding communication means (125) of the secondary camera unit.

2. A lens unit according to claim 1, wherein the measured time difference (ΔT, ΔT') determined from the first (204) and second (205) positions is greater than a fraction of 0.3, preferably greater than 0.5, or more preferred greater than 0.8 of an opening time of the shift from the closed position to the open position or an closing time of the shift from the open position to the closed position.

3. A lens unit according to any of the preceding claims , where the communication means is a connector comprising a single conducting connector.

4. A lens unit according to any of the preceding claims, where the data signal has a single value at any time instant.

5. A lens unit according to any of the preceding claims, where the data signal represents a time difference (ΔT, ΔTs) between detected first and second positions obtained during a shift from the closed position to the open position of the light blocking means.

6. A lens unit according to any of the preceding claims, where the detector is configured for detecting the first and second positions of the light blocking means during a shift from the closed position to the open position, and the lens unit is configured for communicating the data signal representing the time difference between the detected first and second positions during the shift from the closed position to the open position before an initiation of a shift to a subsequent closed position of the light blocking means.

7. A lens unit according to any of the preceding claims, where the communicating of the data signal representing the time difference (ΔT, ΔTs) between the detected first and second positions during the shift from the closed position to the open position is triggered by the setting of a mechanical shutter signal (402) which initiates a change of the position of the light blocking means (111) from a closed state to an open state.

8. A lens unit according to any of the preceding claims, where the time difference between the two detected positions of the light blocking means is represented as one of the following signals: an electrical potential value (303), a time difference between two pulses of a pulse signal and a value of serially communicated binary signal values.

9. A lens unit according to any of the preceding claims, where the communication means has first and second operational modes, the first mode comprising communication of a data signal representing data other than the detected positions (204,205) of the light blocking means, and the second mode comprising communication of the data signal (301-303) representing a time difference (ΔT) between the detected first and second positions of the light blocking means (111).

10. A lens unit according to any of the preceding claims, where a selection of the first or second operational mode is determined depending on a value of a camera signal (402).

11. A lens unit according to any of the preceding claims, where a selection of the first or second operational mode is dependent on the detecting of first (204) and/or second (205) positions of the light blocking means and possibly dependent on the order in time of the detection of first (204) and/or second (205) positions.

12. A secondary camera unit (120) connectable with the lens unit (100) according to claim 1, the secondary camera unit comprising,
- an image sensor (121) configured to receive light transmitted through the mechanical shutter (102),
- a signal generator for generating an imaging start signal for initiating integration of light induced charges or for resetting the image sensor,
- a communication means (125) matching the corresponding communication means (105) of the lens unit for receiving the data signal (301-303) communicated by the lens unit and representing a time difference (ΔT) between the detected first (204) and second (205) positions of the light blocking means (111) comprised by the lens unit,
- a processor for determining the time instant (tre, tre1, tre2) for setting the imaging start signal (211) based upon the received data signal.

13. A secondary camera unit according to claim 12, further comprising,
- a signal generator for setting a flash signal (701) for instructing a flash to generate a light flash,
- a processor for determining the time instant for setting the flash signal based upon the received data signal or based upon the time instant for generation of the integration start signal.

14. A camera body (910) connectable with the lens unit (100) according to claim 1 and the secondary camera unit (120) according to claim 11, the camera body comprising,
- a communication means (906) matching the corresponding communication means (105) of the lens unit for receiving the data signal (301-303) communicated by the lens unit and representing a time difference (ΔT) between the detected first (204) and second (205) positions of the light blocking means (111) comprised by the lens unit,
- communication means (907) matching the corresponding communication means (125) of the secondary camera unit for transmission of the data signal (301-303) to the secondary camera unit.

15. A camera body (910) according to claim 14, further comprising a processor (911) for introducing a delay (ΔTtransmit) on the data signal (301-303) to be transmitted to the communication means (907).

16. A camera system comprising
- a lens unit (100) according to claim 1,
- a camera body (910) according to claim 14, and
- a secondary camera unit (120) according to claim 12.

17. A method for compensating variations in a delay of a transition from an open state to a closed state of a mechanical shutter of a lens unit, where the open state enables transmission of light through the lens unit and the closed state disables light transmission through the lens unit, where the open and closed states are defined by displaceable light blocking means displaceable into respective open and closed positions and where the position of the light blocking means changes gradually during a change from an open state to a closed state, **characterized in that** the method comprises
- detecting first and second positions of the light blocking means, during a shift between the closed position and the open position and generating a data signal representing a time difference between the detected first and second positions of the light blocking means,
- communicating the data signal from the lens unit to a connectable secondary camera unit via a communication means of the lens unit to a matching communication means of the secondary camera unit, where the connectable secondary camera unit is a camera back, or a camera body and a camera back, comprising an image sensor configured to receive light transmitted through the mechanical shutter,
- processing the data signal for determining a time instant for initiating integration of light induced charges of light received subsequent to said time instant or for resetting the image sensor at said time instant, so that an increase of the time difference relative to a nominal time difference causes determination of a time instant being delayed relative to a nominal time instant.

## Patentansprüche

1. Objektiveinheit (100), die mit einer sekundären Kameraeinheit (120) verbunden werden kann, umfassend eine Kamerarückseite oder ein Kameragehäuse und eine Kamerarückseite, wobei die Objektiveinheit umfasst:
- einen mechanischen Verschluss (102) mit verschiebbaren Lichtsperrmitteln (111), wobei die Lichtsperrmittel in eine offene Position verschiebbar sind, um eine Lichtdurchlässigkeit durch die Objektiveinheit zu ermöglichen, und in eine geschlossene Position, um eine Lichtdurchlässigkeit zu deaktivieren, wobei sich die Position der Lichtsperrmittel während einer Verschiebung aus der geschlossenen Position in die offene Position oder umgekehrt allmählich ändert, **dadurch gekennzeichnet, dass** die Objektiveinheit umfasst:
- einen Detektor (103) zum Erfassen einer ersten (204) und zweiten (205) Position der Lichtsperrmittel während einer Verschiebung aus der geschlossenen Position in die offene Position und/oder umgekehrt und zum Erzeugen eines Datensignals (301 bis 303), das eine Zeitdifferenz (AT, AT') zwischen der erfassten ersten und zweiten Position der Lichtsperrmittel darstellt,
- ein Kommunikationsmittel (105) zum Übertragen des vom Detektor (103) abgegebenen Datensignals (301 bis 303) an ein entsprechendes Kommunikationsmittel (125) der sekundären Kameraeinheit.

2. Objektiveinheit nach Anspruch 1, wobei die gemessene Zeitdifferenz (ΔT, ΔT'), die anhand der ersten (204) und der zweiten (205) Position ermittelt wurde, größer als ein Bruchteil von 0,3, vorzugsweise größer als 0,5 oder bevorzugter größer als 0,8 einer Öffnungszeit der Verschiebung aus der geschlossenen Position in die offene Position oder einer Schließzeit der Verschiebung aus der offenen Position in die geschlossene Position ist.

3. Objektiveinheit nach einem der vorhergehenden Ansprüche, wobei das Kommunikationsmittel ein Verbinder ist, der einen einzelnen leitenden Verbinder umfasst.

4. Objektiveinheit nach einem der vorhergehenden Ansprüche, wobei das Datensignal zu jedem Zeitpunkt einen einzelnen Wert aufweist.

5. Objektiveinheit nach einem der vorhergehenden Ansprüche, wobei das Datensignal eine Zeitdifferenz (ΔT, ΔTs) zwischen der erfassten ersten und zweiten Position darstellt, die während einer Verschiebung aus der geschlossenen Position in die offene Position der Lichtsperrmittel erhalten wurde.

6. Objektiveinheit nach einem der vorhergehenden Ansprüche, wobei der Detektor zum Erfassen der ersten und der zweiten Position der Lichtsperrmittel während einer Verschiebung aus der geschlossenen Position in die offene Position konfiguriert ist und die Objektiveinheit zum Übertragen des Datensignals konfiguriert ist, das die Zeitdifferenz zwischen der erfassten ersten und zweiten Position während der Verschiebung aus der geschlossenen Position in die offene Position darstellt, bevor eine Einleitung einer Verschiebung in eine nachfolgende geschlossene Position der Lichtsperrmittel erfolgt.

7. Objektiveinheit nach einem der vorhergehenden Ansprüche, wobei das Übertragen des Datensignals, das die Zeitdifferenz (ΔT, ΔTs) zwischen der erfassten ersten und zweiten Position während der Verschiebung aus der geschlossenen Position in die offene Position darstellt, durch das Einstellen eines mechanischen Verschlusssignals (402) ausgelöst wird, das eine Änderung der Position der Lichtsperrmittel (111) aus einem geschlossenen Zustand in einen offenen Zustand einleitet.

8. Objektiveinheit nach einem der vorhergehenden Ansprüche, wobei die Zeitdifferenz zwischen den beiden erfassten Positionen der Lichtsperrmittel als eines der folgenden Signale dargestellt wird: ein elektrischer Potentialwert (303), eine Zeitdifferenz zwischen zwei Impulsen eines Impulssignals und ein Wert von seriell übertragenen binären Signalwerten.

9. Objektiveinheit nach einem der vorhergehenden Ansprüche, wobei das Kommunikationsmittel einen ersten und zweiten Betriebsmodus aufweist, wobei der erste Modus eine Übertragung eines Datensignals umfasst, das andere Daten als die erfassten Positionen (204, 205) der Lichtsperrmittel darstellt, und der zweite Modus eine Übertragung des Datensignals (301 bis 303) umfasst, das eine Zeitdifferenz (ΔT) zwischen der erfassten ersten und zweiten Position der Lichtsperrmittel (111) darstellt.

10. Objektiveinheit nach einem der vorhergehenden Ansprüche, wobei eine Auswahl des ersten oder des zweiten Betriebsmodus in Abhängigkeit von einem Wert eines Kamerasignals (402) ermittelt wird.

11. Objektiveinheit nach einem der vorhergehenden Ansprüche, wobei eine Auswahl des ersten oder zweiten Betriebsmodus von der Erfassung einer ersten (204) und/oder zweiten (205) Position der Lichtsperrmittel abhängt und möglicherweise von der zeitlichen Reihenfolge der Erfassung einer ersten (204) und/oder einer zweiten (205) Position abhängt.

12. Sekundäre Kameraeinheit (120), die mit der Objektiveinheit (100) nach Anspruch 1 verbunden werden kann, wobei die sekundäre Kameraeinheit umfasst:
- einen Bildsensor (121), der konfiguriert ist, um durch den mechanischen Verschluss (102) hindurchgelassenes Licht zu empfangen,
- einen Signalgenerator zum Erzeugen eines Bildaufnahmestartsignals zum Einleiten einer Integration lichtinduzierter Ladungen oder zum Zurücksetzen des Bildsensors,
- ein Kommunikationsmittel (125), das zu dem entsprechenden Kommunikationsmittel (105) der Objektiveinheit passt, um das von der Objektiveinheit übertragene Datensignal (301 bis 303) zu empfangen, das eine Zeitdifferenz (ΔT) zwischen der erfassten ersten (204) und zweiten (205) Position der Lichtsperrmittel (111) darstellt, die die Objektiveinheit umfasst,
- einen Prozessor zum Ermitteln des Zeitpunkts (tre, tre1, tre2) zum Einstellen des Bildaufnahmestartsignals (211) auf der Grundlage des empfangenen Datensignals.

13. Sekundäre Kameraeinheit nach Anspruch 12, ferner umfassend:
- einen Signalgenerator zum Einstellen eines Blitzsignals (701) zum Anweisen einer Blitzvorrichtung, einen Lichtblitz zu erzeugen,
- einen Prozessor zum Ermitteln des Zeitpunkts zum Einstellen des Blitzsignals auf der Grundlage des empfangenen Datensignals oder auf der Grundlage des Zeitpunkts zur Erzeugung des Integrationsstartsignals.

14. Kameragehäuse (910), das mit der Objektiveinheit (100) nach Anspruch 1 und mit der sekundären Kameraeinheit (120) nach Anspruch 11 verbunden werden kann, wobei das Kameragehäuse umfasst:
- ein Kommunikationsmittel (906), das zu dem entsprechenden Kommunikationsmittel (105) der Objektiveinheit passt, um das von der Objektiveinheit übertragene Datensignal (301 bis 303) zu empfangen, das eine Zeitdifferenz (ΔT) zwischen der erfassten ersten (204) und zweiten (205) Position der Lichtsperrmittel (111) darstellt, die die Objektiveinheit umfasst,
- ein Kommunikationsmittel (907), das zu dem entsprechenden Kommunikationsmittel (125) der sekundären Kameraeinheit passt, um das Datensignal (301 bis 303) an die sekundäre Kameraeinheit zu senden.

15. Kameragehäuse (910) nach Anspruch 14, ferner umfassend einen Prozessor (911) zum Einführen einer Verzögerung (ΔTtransmit) des zu den Kommunikationsmitteln (907) zu sendenden Datensignals (301 bis 303).

16. Kamerasystem, umfassend:
- eine Objektiveinheit (100) nach Anspruch 1,
- ein Kameragehäuse (910) nach Anspruch 14, und
- eine sekundäre Kameraeinheit (120) nach Anspruch 12.

17. Verfahren zum Kompensieren von Variationen in einer Verzögerung eines Übergangs aus einem offenen Zustand in einen geschlossenen Zustand eines mechanischen Verschlusses einer Objektiveinheit, wobei der offene Zustand eine Durchlässigkeit von Licht durch die Objektiveinheit ermöglicht und der geschlossene Zustand die Lichtdurchlässigkeit durch die Objektiveinheit deaktiviert, wobei der offene und der geschlossene Zustand durch verschiebbare Lichtsperrmittel definiert sind, die in jeweilige offene und geschlossene Position verschoben werden können und wobei sich die Position der Lichtsperrmittel während eines Wechsels von einem offenen Zustand in einen geschlossenen Zustand allmählich ändert, **dadurch gekennzeichnet, dass** das Verfahren umfasst
- Erfassen einer ersten und einer zweiten Position der Lichtsperrmittel während einer Verschiebung zwischen der geschlossenen Position und der offenen Position und Erzeugen eines Datensignals, das eine Zeitdifferenz zwischen der erfassten ersten und zweiten Position der Lichtsperrmittel darstellt,
- Übertragen des Datensignals von der Objektiveinheit an eine verbindbare sekundäre Kameraeinheit über ein Kommunikationsmittel der Objektiveinheit zu einem passenden Kommunikationsmittel der sekundären Kameraeinheit, wobei die verbindbare sekundäre Kameraeinheit eine Kamerarückseite oder ein Kameragehäuse und eine Kamerarückseite ist, umfassend einen Bildsensor, der konfiguriert ist, um durch den mechanischen Verschluss hindurchgelassenes Licht zu empfangen,
- Verarbeiten des Datensignals zum Ermitteln eines Zeitpunkts zum Einleiten einer Integration von lichtinduzierten Ladungen von Licht, das nach dem Zeitpunkt empfangen wurde, oder zum Zurückstellen des Bildsensors auf den Zeitpunkt, sodass eine Erhöhung der Zeitdifferenz im Verhältnis zu einer nominellen Zeitdifferenz die Ermittlung eines Zeitpunkts bewirkt, der im Verhältnis zu einem nominellen Zeitpunkt verzögert ist.

## Revendications

1. Unité d'objectif (100) pouvant être connectée à une unité secondaire de caméra ou d'appareil photographique (120), comprenant un dos de caméra ou d'appareil photographique, ou un corps et un dos de caméra ou d'appareil photographique, l'unité d'objectif comprenant
- un obturateur mécanique (102) ayant un moyen de blocage de la lumière (111) mobile, le moyen de blocage de la lumière pouvant être déplacé dans une position d'ouverture permettant la transmission de la lumière à travers l'unité d'objectif et dans une position de fermeture permettant d'empêcher la transmission de la lumière, la position du moyen de blocage de la lumière changeant progressivement lors du passage de la position de fermeture à la position d'ouverture ou inversement, **caractérisée en ce que** l'unité d'objectif comprend,
- un détecteur (103) pour détecter des première (204) et seconde (205) positions du moyen de blocage de la lumière pendant un passage de la position de fermeture à la position d'ouverture et/ou inversement et pour produire un signal de données (301-303) représentant une différence de temps (AT, AT') entre les première et seconde positions détectées du moyen de blocage de la lumière,
- un moyen de communication (105) pour communiquer le signal de données (301-303) délivré par le détecteur (103) à un moyen de communication correspondant (125) de l'unité secondaire de caméra ou d'appareil photographique.

2. Unité d'objectif selon la revendication 1, la différence de temps mesurée (ΔT, ΔT') déterminée à partir des première (204) et seconde (205) positions étant supérieure à une fraction de 0,3, de préférence supérieure à 0,5 ou plus préférablement supérieure à 0,8 d'un temps d'ouverture du passage de la position de fermeture à la position d'ouverture ou d'un temps de fermeture du passage de la position d'ouverture à la position de fermeture.

3. Unité d'objectif selon l'une quelconque des revendications précédentes, le moyen de communication étant un connecteur comprenant un seul connecteur conducteur.

4. Unité d'objectif selon l'une quelconque des revendications précédentes, le signal de données ayant une valeur unique à n'importe quel instant.

5. Unité d'objectif selon l'une quelconque des revendications précédentes, le signal de données représentant une différence de temps (ΔT, ΔTs) entre les première et seconde positions détectées obtenue lors d'un passage de la position de fermeture à la position d'ouverture du moyen de blocage de la lumière.

6. Unité d'objectif selon l'une quelconque des revendications précédentes, le détecteur étant configuré pour détecter les première et seconde positions du moyen de blocage de la lumière lors d'un passage de la position de fermeture à la position d'ouverture et l'unité d'objectif étant configurée pour communiquer le signal de données représentant la différence de temps entre les première et seconde positions détectées lors du passage de la position de fermeture à la position d'ouverture avant le lancement d'un passage vers une position de fermeture ultérieure du moyen de blocage de la lumière.

7. Unité d'objectif selon l'une quelconque des revendications précédentes, la communication du signal de données représentant la différence de temps (ΔT, ΔTs) entre les première et seconde positions détectées pendant le passage de la position de fermeture à la position d'ouverture étant déclenchée par le fait de donner une valeur à un signal d'obturateur mécanique (402) qui lance un changement de la position du moyen de blocage de la lumière (111) d'un état de fermeture à un état d'ouverture.

8. Unité d'objectif selon l'une quelconque des revendications précédentes, la différence de temps entre les deux positions détectées du moyen de blocage de la lumière étant représentée par l'un des signaux suivants : une valeur de potentiel électrique (303), une différence de temps entre deux impulsions d'un signal d'impulsion et une valeur de valeurs de signal binaire communiquées en série.

9. Unité d'objectif selon l'une quelconque des revendications précédentes, le moyen de communication ayant des premier et second modes de fonctionnement, le premier mode comprenant la communication d'un signal de données représentant des données autres que les positions détectées (204, 205) du moyen de blocage de la lumière et le second mode comprenant la communication du signal de données (301-303) représentant une différence de temps (ΔT) entre les première et seconde positions détectées du moyen de blocage de la lumière (111).

10. Unité d'objectif selon l'une quelconque des revendications précédentes, une sélection du premier ou du second mode de fonctionnement étant déterminée en fonction d'une valeur d'un signal de caméra ou d'appareil photographique (402).

11. Unité d'objectif selon l'une quelconque des revendications précédentes, une sélection du premier ou du second mode de fonctionnement dépendant de la détection de la première (204) et/ou de la seconde (205) position du moyen de blocage de la lumière et éventuellement de l'ordre temporel de la détection de la première (204) et/ou de la seconde (205) position.

12. Unité secondaire de caméra ou d'appareil photographique (120) pouvant être connectée à l'unité d'objectif (100) selon la revendication 1, l'unité secondaire de caméra ou d'appareil photographique comprenant,
- un capteur d'image (121) configuré pour recevoir la lumière transmise à travers l'obturateur mécanique (102),
- un générateur de signaux pour produire un signal de début de formation d'image afin de lancer l'intégration de charges induites par la lumière ou de réinitialiser le capteur d'image,
- un moyen de communication (125) adapté au moyen de communication (105) correspondant de l'unité d'objectif pour recevoir le signal de données (301-303) communiqué par l'unité d'objectif et représentant une différence de temps (ΔT) entre la première (204) et la seconde (205) position détectées du moyen de blocage de la lumière (111) compris dans l'unité d'objectif,
- un processeur pour déterminer l'instant temporel (tre, tre1, tre2) pour donner une valeur au signal de début de formation d'image (211) sur la base du signal de données reçu.

13. Unité secondaire de caméra ou d'appareil photographique selon la revendication 12, comprenant en outre,
- un générateur de signaux pour donner une valeur à un signal de flash (701) pour ordonner à un flash de générer un flash lumineux,
- un processeur pour déterminer l'instant temporel pour donner la valeur au signal de flash, en fonction du signal de données reçu ou de l'instant temporel de génération du signal de début d'intégration.

14. Corps de caméra ou d'appareil photographique (910) pouvant être connecté à l'unité d'objectif (100) selon la revendication 1 et à l'unité secondaire de caméra ou d'appareil photographique (120) selon la revendication 11, le corps de caméra ou d'appareil photographique comprenant,
- un moyen de communication (906) adapté au moyen de communication (105) correspondant de l'unité d'objectif pour recevoir le signal de données (301-303) communiqué par l'unité d'objectif et représentant une différence de temps (ΔT) entre la première (204) et la seconde (205) position détectées du moyen de blocage de la lumière (111) compris dans l'unité d'objectif,
- un moyen de communication (907) adapté au moyen de communication (125) correspondant de l'unité secondaire de caméra ou d'appareil photographique, pour la transmission du signal de données (301-303) à l'unité secondaire de caméra ou d'appareil photographique.

15. Corps de caméra ou d'appareil photographique (910) selon la revendication 14, comprenant en outre un processeur (911) pour introduire un retard (ΔTtransmit) sur le signal de données (301-303) à transmettre au moyen de communication (907).

16. Système de caméra ou d'appareil photographique comprenant
- une unité d'objectif (100) selon la revendication 1,
- un corps de caméra ou d'appareil photographique (910) selon la revendication 14 et
- une unité secondaire de caméra ou d'appareil photographique (120) selon la revendication 12.

17. Procédé de compensation des variations d'un retard d'une transition d'un état d'ouverture à un état de fermeture d'un obturateur mécanique d'une unité d'objectif, l'état d'ouverture permettant la transmission de la lumière à travers l'unité d'objectif et l'état de fermeture empêchant la transmission de la lumière à travers l'unité d'objectif, les états d'ouverture et de fermeture étant définis par un moyen de blocage de la lumière mobile pouvant être déplacé dans des positions d'ouverture et de fermeture respectives et dans lequel la position du moyen de blocage de la lumière change progressivement lors du passage d'un état d'ouverture à un état de fermeture, **caractérisé en ce que** le procédé comprend des étapes de
- détecter les première et seconde positions du moyen de blocage de la lumière lors d'un passage de la position de fermeture à la position d'ouverture et produire un signal de données représentant une différence de temps entre les première et seconde positions détectées du moyen de blocage de la lumière,
- communiquer le signal de données de l'unité d'objectif à une unité secondaire de caméra ou d'appareil photographique connectable, par l'intermédiaire d'un moyen de communication de l'unité d'objectif, à un moyen de communication correspondant de l'unité secondaire de caméra ou d'appareil photographique, l'unité secondaire de caméra ou d'appareil photographique connectable étant un dos de caméra ou d'appareil photographique, ou un corps et un dos de caméra ou d'appareil photographique, comprenant un capteur d'image configuré pour recevoir la lumière transmise à travers l'obturateur mécanique,
- traiter le signal de données pour déterminer un instant temporel pour lancer l'intégration des charges lumineuses induites par la lumière reçue après ledit instant temporel ou pour réinitialiser le capteur d'image audit instant temporel, de sorte qu'une augmentation de la différence de temps par rapport à une différence de temps nominale amène à déterminer un instant temporel retardé par rapport à un instant temporel nominal.
